# EUROPÄISCHE PATENTSCHRIFT

(11) **EP 2 174 432 B1**
(45) Veröffentlichungstag und Bekanntmachung des Hinweises auf die Patenterteilung: **10.04.2013**
(21) Anmeldenummer: 08786036.7
(22) Anmeldetag: 10.07.2008
(51) Int. Cl.: H04B 10/11

(54) **DATENÜBERTRAGUNGSSYSTEM UND VERFAHREN ZUM ÜBERTRAGEN VON DATEN IN EINEM DATENÜBERTRAGUNGSSYSTEM**
DATA TRANSMISSION SYSTEM AND METHOD FOR TRANSMITTING DATA IN A DATA TRANSMISSION SYSTEM
SYSTÈME DE TRANSMISSION DE DONNÉES ET PROCÉDÉ DE TRANSMISSION DE DONNÉES DANS UN SYSTÈME DE TRANSMISSION DE DONNÉES

(30) Priorität: 06.08.2007 DE 102007037026; 03.01.2008 DE 102008003089
(43) Veröffentlichungstag der Anmeldung: 14.04.2010
(73) Patentinhaber: Siemens Aktiengesellschaft, 80333 München (DE)
(72) Erfinder: WALEWSKI, Joachim, 82008 Unterhaching (DE); BREYER, Florian, 80939 München (DE); RANDEL, Sebastian, 81547 München (DE)
(86) Internationale Anmeldenummer: PCT/EP2008/058982
(87) Internationale Veröffentlichungsnummer: WO 2009/019106

(56) Entgegenhaltungen:
- GB-A- 2 079 088
- US-A- 3 927 316
- US-A1- 2004 208 603

## Beschreibung

Die Erfindung betrifft ein Datenübertragungssystem mit einem lichtemittierenden Sender, einem lichtempfangenden Empfänger und einem auf inkohärentem Licht basierenden Datenübertragungskanal. Die Erfindung betrifft weiter ein Verfahren zum Übertragen in einem solchen Datenübertragungssystem.

Bei einer sog. Freiraumübertragung, im Speziellen einer Datenübertragung im Nahbereich mit inkohärentem Licht mittels einer schnellen Modulation der optischen Leistung einer optischen Lichtquelle besteht der Nachteil, dass Datenraten über 40 MBit/s nicht mit einfachen Modulationsverfahren, wie z.B. dem On-Off-Keying (OOK), realisiert werden können. Der Grund hierfür liegt darin, dass die geringe Modulationsbandbreite des Senders sowie des Empfängers zu einem Verschmieren des Datensignals und damit zu einer Überlagerung von gesendeten Symbolen führen kann. Als optische Quelle in einem solchen Datenübertragungssystem können beispielsweise IR (Infrarot)-LEDs in dem Datenübertragungsstandard IrDA (Infrared Data Association) oder auch Leuchtstoffröhren bei der Übertragung von sichtbarem Licht verwendet werden. Prinzipiell bieten sich als optische Quelle auch Weißlicht-LEDs an. Jedoch führt deren kontinuierliche Verbesserung der Effizienz zu einer Einschränkung der nutzbaren Modulationsbandbreite, was der Erzielung hoher Datenraten entgegensteht.

Einer Bandbreitenbegrenzung in einem Übertragungskanal kann bekanntermaßen durch eine höhere spektrale Effizienz entgegengewirkt werden. Hier kann beispielsweise eine Mehrstufenmodulation verwendet werden. Bei dieser werden die Symbole derart lange ausgebildet, so dass keine nennenswerte Überlagerung der gesendeten Symbole erfolgt. Zur Steigerung der Datenrate können anstatt einer logischen "1" und einer logischen "0" auch Symbole mit höherem Wert gesendet werden, z.B. logisch "2", "3", "4" usw. Dann ist beispielsweise die Amplitude um den Faktor 2, 3 oder 4 größer als bei einer logischen "1" (Pulse Amplitude Modulation, PAM). In der digitalen Bildgebung sind Graustufen das Pendant zu dieser Mehrstufenmodulation.

Bei der oben erläuterten Pulsamplitudenmodulation können somit 2 Bit in jedem Symbol übertragen werden, nämlich "00", "01", "10" oder "11". Dies bedeutet, dass mit N verschiedenen Amplituden/Graustufen log₂(N) mehr Bits pro Symbol als bei dem Modulationsverfahren On-Off-Keying übertragen werden können. Ist beispielsweise die Übertragungsgeschwindigkeit bei On-Off-Keying auf 25 MBit/s beschränkt, so können mit 2⁵ = 32 Amplituden/Graustufen 125 MBit/s übertragen werden.

Allen Mehrstufenmodulationsverfahren ist gemeinsam, dass die durch den Empfänger empfangene Leistung und auch das Signal/Rausch-Verhältnis höher als bei On-Off-Keying sein muss, damit die Amplituden/Graustufen klar voneinander unterschieden werden können. Ein weiteres gemeinsames Merkmal ist, dass die Linearität des Datenübertragungssystems besser sein muss.

Im Zusammenhang mit der Datenübertragung über einen drahtlosen Infrarot-Übertragungskanal ist die Anwendung einer Vorentzerrung des über den Übertragungskanal zu übertragenden Datensignals bekannt (vgl. K. L. Sterckx und J. M. H. Elmirghani, "On the Use of Pre-distorsion Equalization in Infrared Wireless Communication Links" IEEE International Conference on Communications, Vol. 7, Pgs. 2166-2170, 2001). Hierbei ist der Spezialfall einer ungerichteten Übertragung, d.h. einer Übertragung bei der sich der Sender und der Empfänger einander "sehen" können, betrachtet, bei welcher ein signifikanter Anteil der von dem Sender abgegebenen Lichtstrahlung diffus reflektiert wird. Eine solche Reflexion kann durch Wände und/oder Einrichtungsgegenstände in einem Raum hervorgerufen sein. Bei der in diesem Dokument beschriebenen Datenübertragung existiert eine Bandbreitenbegrenzung in dem Freiraumkanal, d.h. das "Verschmieren" der übertragenen Symbole kommt durch einfache oder mehrfache Reflexion an z.B. den Wänden zustande. Nachteilig bei dem in diesem Dokument beschriebenen Datenübertragungssystem ist der Umstand, dass die Vorentzerrung von der Übertragungsfunktion des Freiraumkanals abhängt. Die Übertragungsfunktion ist beispielsweise abhängig davon, ob und welche Möbel in dem Raum des Datenübertragungssystems vorhanden sind. Dies hat jedoch zur Folge, dass die Vorentzerrung an die jeweilige Umgebung und auch an Veränderungen angepasst werden muss, was, sofern überhaupt möglich, einen Rückkanal des Empfängers zur Anpassung der Vorentzerrung an die Änderung im Freiraumkanal erfordert. Hierdurch ist ein derartiges Datenübertragungssystem aus Systemgesichtspunkten jedoch zu komplex und zu teuer.

Aus der US 3,927,316, der US 2004/0208603 A1 und der GB 2 079 088 A sind Datenübertragungssysteme mit einem Licht emittierenden Sender, einem Licht empfangenden Empfänger und einem Datenübertragungskanal bekannt, bei dem eine dem Sender vorgeschaltete Vorentzerrungseinrichtung zur Verbesserung des Signal-Rausch-Verhältnisses eines von dem Sender zu dem Empfänger über den Datenübertragungskanal zu übertragenden Datensignals vorgesehen ist.

Es ist daher Aufgabe der vorliegenden Erfindung, ein Datenübertragungssystem und ein Verfahren zum Übertragen von Daten in einem Datenübertragungssystem anzugeben, welche eine Datenübertragung im Nahbereich mit inhärentem Licht mittels einer schnellen Modulation der optischen Leistung einer optischen Quelle mit Übertragungsgeschwindigkeiten von mehr als 40 MBit/s und insbesondere mehr als 100 MBit/s, erlauben.

Diese Aufgaben werden durch ein Datenübertragungssystem gemäß den Merkmalen des Patentanspruches 1 und ein Verfahren zum Übertragen von Daten in einem erfindungsgemäßen Datenübertragungssystem mit den Merkmalen des Patentanspruches 14 gelöst. Vorteilhafte Ausgestaltungen ergeben sich jeweils aus den abhängigen Patentansprüchen.

Bei einem erfindungsgemäßen Datenübertragungssystem mit einem lichtemittierenden Sender, einem lichtempfangenden Empfänger und einem Datenübertragungskanal ist eine dem Sender vorgeschaltete Vorentzerrungseinrichtung zur Vorentzerrung eines von dem Sender zu dem Empfänger über den Datenübertragungskanal zu übertragenden Datensignals vorgesehen, wobei das von dem Sender zu übertragende Signal durch die Vorentzerrungseinrichtung derart aufbereitbar ist, dass die von dem Sender abgegebene optische Leistung in etwa einem Rechtecksignal entspricht. Der Datenübertragungskanal wird in seiner Bandbreite nicht begrenzt. Die Übertragung des zu übertragenden Datensignals erfolgt mit einer vorgegebenen maximalen Bandbreite des Senders.

Der auf inkohärentem Licht basierende Datenübertragungskanal impliziert, dass der Sender zur Abgabe von inkohärentem Licht und der Empfänger zum Empfang von inkohärentem Licht ausgebildet sind.

Die Erfindung beruht auf dem Prinzip der Anwendung der Vorentzerrung für Direktübertragungen. Diese weist die Eigenschaft auf, dass bei einem solchen Übertragungskanal Reflexionen vernachlässigbar sind. Damit liegen konstante Übertragungsbedingungen vor. Die Verwendung der Vorentzerrung zur Erhöhung der Datenrate über den bandbreitenbegrenzten inkohärenten Übertragungskanal hat im Vergleich zur Mehrstufenmodulation den Vorteil, dass wesentlich weniger hohe Ansprüche an die Linearität des Datenübertragungssystems gestellt werden. Eine Zuordnung der Entzerrung zu dem Sender hat ferner bei nicht-diffusen Übertragungskanälen den Vorteil, dass die Komplexität des Empfängers im Vergleich zum Stand der Technik deutlich verringert ist. Ein weiterer Vorteil ist der Umstand, dass in der Praxis existierende Empfänger beispielsweise für das On-Off-Keying verwendet werden können, da die Entzerrung dem Sender vorgeschaltet ist, d.h. im Sender stattfindet.

Als Datenübertragungskanal wird vorzugsweise eine gerichtete Datenübertragung des Datensignals im freien Raum zwischen dem Sender und dem Empfänger verwendet. Hierbei kann weiter vorgesehen sein, dass der Datenübertragungskanal keine diffusen Reflexionen aufweist. Der Datenübertragungskanal kann auch als Punkt-zu-Punkt Verbindung zwischen dem Sender und dem Empfänger ausgebildet sein. Die Verwendung einer direkten Verbindung bringt den Vorteil, dass die Vorentzerrung nur von einer festgelegten Übertragungsfunktion von Sender und Empfänger, nicht jedoch von der Übertragungsfunktion des Übertragungskanals abhängt. Hierdurch kann ein erfindungsgemäßes Datenübertragungssystem auf besonders einfache und kostengünstige Weise bereitgestellt werden. So ist es beispielsweise möglich, den Standort (z.B. den Raum) des Senders, zu verändern, ohne dass hierdurch die Übertragungsgeschwindigkeit des Datenübertragungssystems beeinflusst wird.

Gemäß einer weiteren zweckmäßigen Ausgestaltung ist die Bandbreitenbegrenzung des Datenübertragungskanals größer als die Bandbreite des Sensors und/oder des Empfängers. In der Veröffentlichung J. Grubor, O. C. Gaete, J. W. Walewski, S. Randel und K.-D. Langer, "High Speed Wireless Indoor Communication via Visible Light", in ITG-Fachtagung "Breitbandversorgung in Deutschland - Vielfalt für alle?", ITG-Fachbericht Band 198, Seite 201, Berlin, Deutschland, 7. bis 8. März 2007, wurde für die Datenübertragung unter Verwendung von Deckenlampen als Sender gezeigt, dass die Bandbreite des Übertragungskanals für typische Büroräume bei 200 MHz und höher liegt und damit weit über den Bandbreiten typischer inkohärenter Sender (Lichtquellen) und Empfänger. Deren Bandbreiten sind üblicherweise kleiner als 50 MHz. Als Sender können eine lichtemittierende Diode (LED), insbesondere eine Weißlicht-LED oder eine Infrarot-LED, eine Leuchtstoffröhre, ein Laser, eine Glühbirne, verwendet werden.

Die Anwendung des erfindungsgemäßen Datenübertragungssystems in einem Datenübertragungsszenario, wie dieses in Grubor et al. beschrieben ist, weist den Vorteil auf, dass die Vorentzerrung nicht an Umgebungsveränderungen angepasst werden muss. Dies hat zur Folge, dass die Vorentzerrung bereits bei der Produktion an den zu verwendenden Sender und den zu verwendenden Empfänger angepasst werden kann, wodurch im Ergebnis eine kontinuierlich hohe Übertragungsrate garantiert ist.

Gemäß einer weiteren Ausgestaltung des Datenübertragungssystems erlaubt der Datenübertragungskanal eine Datenübertragung nur von dem Sender zu dem Empfänger. Es handelt sich damit um eine sog. Simplex-Verbindung, wobei im Gegensatz zum Stand der Technik ein Rückkanal zur Adaption der Vorentzerrung nicht benötigt wird.

Der Empfänger kann beispielsweise als Fotodiode, insbesondere als PIN (Positive Intrinsic Negative)-Diode ausgebildet sein.

In einer weiteren Ausgestaltung kann ferner vorgesehen sein, dass das Datensignal einem mit dem Empfänger gekoppelten Entzerrer zuführbar ist zur Durchführung einer dem Empfang des Datensignals nachgeschalteten weiteren Entzerrung.

Bei einem erfindungsgemäßen Verfahren zum Übertragen von Daten in einem Datenübertragungssystem mit einem lichtemittierenden Sender, einem lichtempfangenden Empfänger und einem Datenübertragungskanal wird ein von dem Sender zu dem Empfänger über den Datenübertragungskanal zu übertragendes Datensignal in einer dem Sender vorgeschalteten Vorentzerrungseinrichtung vorentzerrt, wobei das von dem Sender zu übertragende Signal durch die Vorentzerrungseinrichtung derart aufbereitet wird, dass die von dem Sender abgegebene optische Leistung in etwa einem Rechtecksignal entspricht. Das Datensignal wird über den Datenübertragungskanal, der in seiner Bandbreite nicht begrenzt wird, an den Empfänger übertragen. Die Übertragung des Datensignals erfolgt hierbei mit einer vorgegebenen maximalen Bandbreite des Senders.

Das erfindungsgemäße Verfahren weist die gleichen Vorteile auf, wie diese in Verbindung mit dem erfindungsgemäßen Datenübertragungssystem beschrieben wurden.

Es ist ferner vorgesehen, dass als Datenübertragungskanal eine gerichtete Datenübertragung des Datensignals im freien Raum, insbesondere ohne diffuse Reflexionen, zwischen dem Sender und dem Empfänger verwendet wird.

Als Datenübertragungskanal wird gemäß einer weiteren Ausgestaltung des erfindungsgemäßen Verfahrens eine Punkt-zu-Punkt Verbindung zwischen dem Sender und dem Empfänger verwendet.

Die Bandbreitenbegrenzung des Datenübertragungskanals wird in einer weiteren Ausgestaltung größer als die Bandbreite(n) des Senders und/oder des Empfängers gewählt.

Es ist ferner vorgesehen, dass der Datenübertragungskanal eine Datenübertragung nur von dem Sender zu dem Empfänger erlaubt, wodurch eine Einwegkommunikation bereitgestellt wird.

Die Erfindung wird nachfolgend näher anhand der Figuren erläutert. Es zeigen:
- Fig. 1A und 1B: die bei der Datenübertragung im Nahbereich mit inkohärentem Licht auftretende Problematik des Verschmierens eines modulierten Datensignals in Abhängigkeit einer gewählten Modulationsbandbreite, und
- Fig. 2: eine schematische Darstellung des erfindungsgemäßen Datenübertragungssystems.

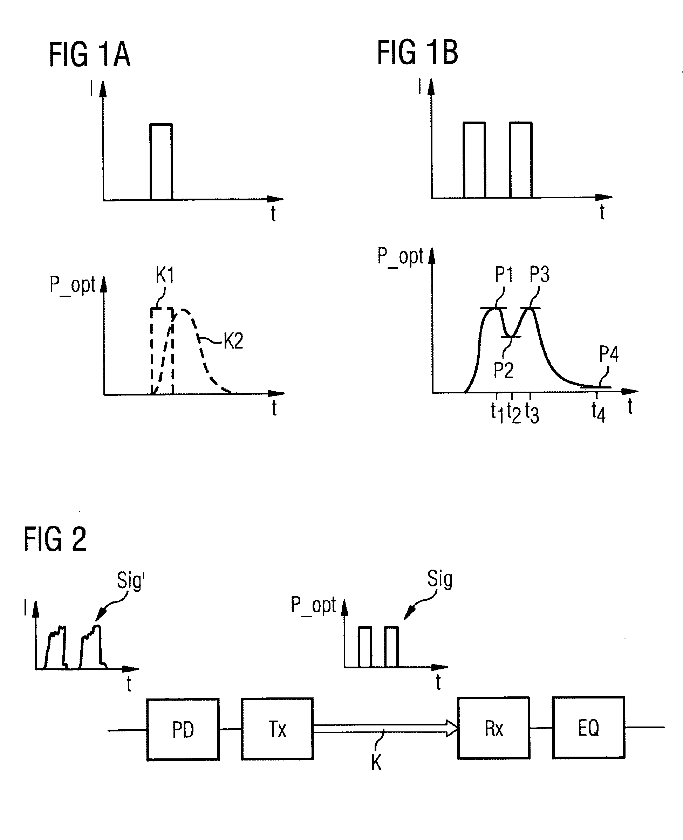

Die Figur 1A veranschaulicht die bei der Datenübertragung im Nahbereich mit inkohärentem Licht mittels schneller Modulation der optischen Leistung einer optischen Quelle auftretenden Probleme. Im oberen Diagramm der Figur 1A ist das zu übertragende Datensignal in Form eines Strompulses dargestellt. Ein Strompuls entspricht beispielsweise der logischen "1". Aufgrund der Eigenschaften des Senders, einer optischen Quelle, wie z.B. einer Leuchtdiode, Leuchtstoffröhre, Glühbirne oder einem Laser, ergibt sich bei hoher Bandbreitenbegrenzung in dem unteren Diagramm der Fig. 1A der mit K1 dargestellte Verlauf der optischen Leistung P_opt, der annähernd dem Verlauf des Strompulses entspricht und damit ideal ist. Bei niedrigerer Bandbreitenbegrenzung resultiert aus dem Stromimpuls der mit K2 gezeigte Verlauf, in welchem eine "Verschmierung" stattfindet. Für den Empfänger besteht dabei die Problematik, dass dieser aus dem "verschmierten" Verlauf erkennen muss, ob eine logische "1" oder eine logische "0" übertragen wurde. Aus Fig. 1A wird ohne Weiteres ersichtlich, dass die Bandbreitenbegrenzung ursächlich für die Abgabe der optischen Leistung P_opt in Reaktion auf ein dem Sender zugeführtes Signal (hier: dem Strompuls) ist. Im Falle einer Leuchtdiode ergibt sich eine Bandbreitenbegrenzung durch deren Größe, das gewählte Material sowie deren Effizienz.

Ein erstes sich hieraus ergebendes Problem ist anhand Fig. 1B gut erkennbar, in welcher dem Sender eines Datenübertragungssystems beispielhaft die Bitfolge "101" zugeführt wird. Bei Betrachtung der von dem Sender abgegebenen optischen Leistung P_opt wird hierbei von einem Sender mit geringer Bandbreitenbegrenzung (entsprechend der Kurve K2 in Fig. 1A) ausgegangen. Wie aus dem unteren Diagramm der Fig. 1B ersichtlich ist, muss durch den Empfänger aus der empfangenen optischen Leistung die gesendete Bitfolge "101" decodiert werden, was aufgrund der "Verschmierung" dieses Datensignals fehlerbehaftet ist. Aufgrund der Übertragungseigenschaften des Senders weisen die Punkte P1 und P3, welche jeweils logisch "1" entsprechen, den gleichen Betrag der optischen Leistung P_opt auf. Die Punkte P2 und P4 hingegen weisen eine unterschiedlich hohe optische Leistung P_opt auf, obwohl beide einer logisch "0" entsprechen. Für den Empfänger ist es deshalb schwierig, festzustellen, ob insbesondere Punkt P2 einer logischen "1" oder logischen "0" entspricht.

Ein zweites Problem liegt darin, dass unvermeidbares Rauschen, z.B. in der Empfänger-Analogelektronik, dazu führt, dass der nutzbare Abstand zwischen einer logischen "0" und einer logischen "1" noch kleiner wird. Bei starker Verschmierung und entsprechendem Rauschen ist deshalb bei einer Bitfolge ("101"-Folge) kein signifikanter Unterschied zwischen einer "1" und einer "0" feststellbar.

Fig. 2 zeigt in einer schematischen Darstellung das erfindungsgemäße Vorgehen, um die oben beschriebene Problematik zu umgehen und gleichzeitig eine hohe Datenrate von beispielsweise 100 MBit/s bei einer Datenübertragung im Nahbereich mit inkohärentem Licht zu erzielen. Das Datenübertragungssystem weist einen Sender Tx auf, welcher über einen drahtlosen optischen Übertragungskanal K ein Datensignal Sig an einen Empfänger Rx überträgt. Dem Sender Tx vorgeschaltet ist eine Vorentzerrungseinrichtung PD. Dieser wird ein zu übertragendes Datensignal Sig' zugeführt, wobei das von dem Sender Tx zu übertragende Signal durch die Vorentzerrungseinrichtung PD derart aufbereitet wird, dass die von dem Sender abgegebene optische Leistung P_opt in etwa einem Rechtecksignal (vgl. Datensignal Sig) entspricht, welches durch den Empfänger Rx auf einfach Weise decodiert werden kann.

Voraussetzung für die Erzielung der hohen Datenrate ist, dass der Übertragungskanal K stabil ist, d.h. innerhalb vorgegebener Schranken konstante Übertragungsbedingungen aufweist und idealerweise nicht bandbreitenbegrenzt ist. Hierzu kann als Datenübertragungskanal K eine gerichtete Datenübertragung im freien Raum, insbesondere ohne diffuse Reflexionen, zwischen dem Sender Tx und dem Empfänger Rx vorgesehen werden. Der Datenübertragungskanal K kann insbesondere als Punkt-zu-Punkt Verbindung zwischen dem Sender und Empfänger ausgebildet sein. Dabei ist es zweckmäßig, wenn die Bandbreitenbegrenzung des Übertragungskanals K durch Reflexionen weit über den Bandbreiten des Senders Tx und des Empfängers Rx liegt. Dies kann beispielsweise durch die Ausgestaltung des Senders Tx als Laser, Leuchtdiode (Weißlicht oder LED), Glühbirne oder Leuchtstoffröhre sichergestellt werden. Bei Laser hängt es dabei davon ab, wie hoch die gewählte Modulationsfrequenz liegt. Gängige Laserdioden haben Modulationsbandbreiten im GHz-Bereich und liegen damit potentiell oberhalb der Bandbreitenbegrenzung eines Raumes.

Aufgrund der vorgenommenen Vorentzerrung, welche in den Sender Tx integriert sein kann, wird kein Rückkanal von dem Empfänger Rx zur Adaption der Vorentzerrung benötigt. Der Übertragungskanal K kann deshalb als Simplex- oder Einweg-Verbindung ausgeführt sein.

Da die Vorentzerrung nicht an Umgebungsveränderungen angepasst werden muss, kann diese bereits bei der Produktion an die zu verwendende Lichtquelle und dem Empfänger angepasst werden. Bereits hierdurch wird eine kontinuierlich hohe Übertragungsrate garantiert.

Die Verwendung von Entzerrung zur Erhöhung von Datengeschwindigkeiten über bandbreitenbegrenzte, inkohärente Übertragungsstrecken hat im Vergleich zur eingangs beschriebenen Mehrstufenmodulation den Vorteil, dass geringere Ansprüche an die Linearität des Datenübertragungssystems gestellt werden.

Die Platzierung der Entzerrung in den Sender bzw. die senderseitige Vornahme der Entzerrung (Vorentzerrung), weist außerdem bei nicht-diffusen Übertragungsstrecken den Vorteil auf, dass die Komplexität des Empfängers Rx gering gehalten werden kann.

Das Fokussieren auf direkte Verbindungen (Punkt-zu-Punkt Verbindung) bringt den Vorteil, dass die Vorentzerrung nur noch von einer festen Übertragungsfunktion des Senders und des Empfängers, jedoch nicht von dem Übertragungskanal abhängt. Ein Sender kann damit in einem anderen Raum angeordnet werden, ohne dass hierdurch die Übertragungsgeschwindigkeit beeinflusst würde.

Ein weiterer Vorteil der Vorentzerrung besteht darin, dass herkömmliche Empfänger, wie diese bei dem Modulationsverfahren On-Off-Keying verwendet werden, benutzt werden können.

Optional kann, wie dies in Fig. 2 dargestellt ist, zusätzlich zu der notwendigen Vorentzerrung auch eine empfangsseitig vorgenommene Entzerrungseinrichtung EQ vorgesehen sein, um das Datensignal Sig gegebenenfalls weiter zu verbessern.

## Patentansprüche

1. Datenübertragungssystem mit einem lichtemittierenden Sender (Tx), einem lichtempfangenden Empfänger (Rx) und einem Datenübertragungskanal (DK), wobei
- der Datenübertragungskanal (K) in seiner Bandbreite nicht begrenzt wird, und - die Übertragung des zu übertragenden Datensignals (Sig) mit einer vorgegebenen maximalen Bandbreite des Senders (Tx) erfolgt.
**dadurch gekennzeichnet, dass**
- eine dem Sender (Tx) vorgeschaltete Vorentzerrungseinrichtung (PD) zur Vorentzerrung eines von dem Sender (Tx) zu dem Empfänger (Rx) über den Datenübertragungskanal (K) zu übertragenden Datensignals (Sig) vorgesehen ist, wobei das von dem Sender (Tx) zu übertragende Signal durch die Vorentzerrungseinrichtung (PD) derart aufbereitbar ist, dass die von dem Sender (Tx) abgegebene optische Leistung in etwa einem Rechtecksignal entspricht,

2. Datenübertragungssystem nach Anspruch 1, **dadurch gekennzeichnet, dass** als Datenübertragungskanal (K) eine gerichtete Datenübertragung des Datensignals (Sig) im freien Raum zwischen dem Sender (Tx) und dem Empfänger (Rx) verwendet wird.

3. Datenübertragungssystem nach Anspruch 2, **dadurch gekennzeichnet, dass** der Datenübertragungskanal keine diffusen Reflexionen aufweist.

4. Datenübertragungssystem nach einem der vorherigen Ansprüche, **dadurch gekennzeichnet, dass** der Datenübertragungskanal (K) als Punkt-zu-Punkt Verbindung zwischen dem Sender (Tx) und dem Empfänger (Rx) ausgebildet ist.

5. Datenübertragungssystem nach einem der vorherigen Ansprüche, **dadurch gekennzeichnet, dass** die Bandbreitenbegrenzung des Datenübertragungskanals (K) größer als die Bandbreite(n) des Senders (Tx) und/oder des Empfängers (Rx) ist.

6. Datenübertragungssystem nach einem der vorherigen Ansprüche, **dadurch gekennzeichnet, dass** der Datenübertragungskanal (K) eine Datenübertragung nur von dem Sender (Tx) zu dem Empfänger (Rx) erlaubt.

7. Datenübertragungssystem nach einem der Ansprüche 1 bis 6, **dadurch gekennzeichnet, dass** der Sender (Tx) eine lichtemittierende Diode (LED), insbesondere eine Weißlicht-LED oder eine Infrarot-LED, ist.

8. Datenübertragungssystem nach einem der Ansprüche 1 bis 6, **dadurch gekennzeichnet, dass** der Sender (Tx) eine Leuchtstoffröhre ist.

9. Datenübertragungssystem nach einem der Ansprüche 1 bis 6, **dadurch gekennzeichnet, dass** der Sender (Tx) ein Laser ist.

10. Datenübertragungssystem nach einem der Ansprüche 1 bis 6, **dadurch gekennzeichnet, dass** der Sender (Tx) eine Glühbirne ist.

11. Datenübertragungssystem nach einem der vorherigen Ansprüche, **dadurch gekennzeichnet, dass** der Empfänger (Rx) eine Photodiode, insbesondere eine PIN-Diode ist.

12. Datenübertragungssystem nach einem der vorherigen Ansprüche, **dadurch gekennzeichnet, dass** das Datensignal (Sig) einem mit dem Empfänger (Rx) gekoppelten Entzerrer (EQ) zuführbar ist zur Durchführung einer dem Empfang des Datensignals (Sig) nachgeschalteten Entzerrung.

13. Verfahren zum Übertragen von Daten in einem Datenübertragungssystem mit einem lichtemittierenden Sender (Tx), einem lichtempfangenden Empfänger (Rx) und einem Datenübertragungskanal (K), **gekennzeichnet durch** die Schritte:
- ein von dem Sender (Tx) zu dem Empfänger (Rx) über den Datenübertragungskanal (K) zu übertragendes Datensignal (Sig) in einer dem Sender (Tx) vorgeschalteten Vorentzerrungseinrichtung (PD) vorentzerrt wird, wobei das von dem Sender (Tx) zu übertragende Signal **durch** die Vorentzerrungseinrichtung (PD) derart aufbereitet wird, dass die von dem Sender (Tx) abgegebene optische Leistung in etwa einem Rechtecksignal entspricht
- das Datensignal (Sig) über den Datenübertragungskanal (K), der in seiner Bandbreite nicht begrenzt wird, an den Empfänger (Rx) übertragen wird, und
- die Übertragung des Datensignals (Sig) mit einer vorgegebenen maximalen Bandbreite des Senders (Tx) erfolgt.

14. Verfahren nach Anspruch 13, **dadurch gekennzeichnet, dass** als Datenübertragungskanal (K) eine gerichtete Datenübertragung des Datensignals (Sig) im freien Raum, insbesondere ohne diffuse Reflexionen, zwischen dem Sender (Tx) und dem Empfänger (Rx) verwendet wird.

15. Verfahren nach Anspruch 14, **dadurch gekennzeichnet, dass** als Datenübertragungskanal (K) eine Punkt-zu-Punkt Verbindung zwischen dem Sender (Tx) und dem Empfänger (Rx) verwendet wird.

16. Verfahren nach einem der Ansprüche 13 bis 15, **dadurch gekennzeichnet, dass** die Bandbreitenbegrenzung des Datenübertragungskanals (K) größer als die Bandbreite(n) des Senders (Tx) und/oder des Empfängers (Rx) gewählt wird.

17. Verfahren nach einem der Ansprüche 13 bis 16, **dadurch gekennzeichnet, dass** der Datenübertragungskanal (K) eine Datenübertragung nur von dem Sender (Tx) zu dem Empfänger (Rx) erlaubt.

## Claims

1. Data transmission system having a light-emitting transmitter (Tx), a light-receiving transmitter (Rx) and a data transmission channel (DK) wherein the data transmission channel (K) is not restricted in terms of its bandwidth, and the transmission of the data signal (Sig) to be transmitted takes place with a predetermined maximum bandwidth of the transmitter (Tx) **characterised in that**
- a pre-equalization device (PD) arranged upstream of the transmitter (Tx) is provided in order to pre-equalize a data signal (Sig) to be transmitted from the transmitter (Tx) to the receiver (Rx) by way of the data transmission channel (K), wherein the signal to be transmitted from the transmitter (Tx) can be prepared by the pre-equalization device (PD) such that the optical output emitted by the transmitter (Tx) corresponds approximately to a rectangular signal.

2. Data transmission system according to claim 1, **characterised in that** a targeted data transmission of the data signal (Sig) in the free space between the transmitter (Tx) and the receiver (Rx) is used as a data transmission channel (K).

3. Data transmission system according to claim 2, **characterised in that** the data transmission channel does not have any diffuse reflections.

4. Data transmission system according to one of the preceding claims, **characterised in that** the data transmission channel (K) is embodied as a point-to-point connection between the transmitter (Tx) and the receiver (Rx).

5. Data transmission system according to one of the preceding claims, **characterised in that** the bandwidth restriction of the data transmission channel (K) is greater than the bandwidth(s) of the transmitter (Tx) and/or of the receiver (Rx).

6. Data transmission system according to one of the preceding claims, **characterised in that** the data transmission channel (K) allows a data transmission only from the transmitter (Tx) to the receiver (Rx) .

7. Data transmission system according to one of claims 1 to 6, **characterised in that** the transmitter (Tx) is a light-emitting diode (LED), in particular a white light LED or an infrared LED.

8. Data transmission system according to one of claims 1 to 6, **characterised in that** the transmitter (Tx) is a fluorescent tube.

9. Data transmission system according to one of claims 1 to 6, **characterised in that** the transmitter (Tx) is a laser.

10. Data transmission system according to one of claims 1 to 6, **characterised in that** the transmitter (Tx) is a bulb.

11. Data transmission system according to one of the preceding claims, **characterised in that** the receiver (Rx) is a photodiode, in particular a PIN diode.

12. Data transmission system according to one of the preceding claims, **characterised in that** the data signal (Sig) can be supplied with a pre-equalizer (EQ) which is coupled to the receiver (Rx) in order to implement a pre-equalization which is arranged downstream of the reception of the data signal (Sig).

13. Method for transmitting data in a data transmission system having a light-emitting transmitter (Tx), a light-receiving receiver (Rx) and a data transmission channel (K) **characterised by** the steps;
- a data signal (Sig) to be transmitted from the transmitter (Tx) to the receiver (Rx) by way of the data transmission channel (K) is pre-equalized in a pre-equalization facility (PD) arranged upstream of the transmitter (Tx), wherein the signal (Sig) to be transmitted from the transmitter (Tx) is prepared by the pre-equalization facility (PD) such that the optical output emitted by the transmitter (Tx) corresponds approximately to a rectangular signal
- the data signal (Sig) is transmitted via the data transmission channel (K), which is not restricted in terms of its bandwidth, to the receiver (Rx), and
- the transmission of the data signal (Sig) takes place with a predescribed maximum bandwidth of the transmitter (Tx).

14. Method according to claim 13, **characterised in that** a targeted data transmission of the data signal (Sig) in the free space, in particular without diffuse reflections, between the transmitter (Tx) and the receiver (Rx) is used as a data transmission channel (K).

15. Method according to claim 14, **characterised in that** a point-to-point connection between the transmitter (Tx) and the receiver (Rx) is used as a data transmission channel (K).

16. Method according to one of claims 13 to 15, **characterised in that** the bandwidth restriction of the data transmission channel (K) is greater than the bandwidth(s) of the transmitter (Tx) and/or of the receiver (Rx).

17. Method according to one of claims 13 to 16, **characterised in that** the data transmission channel (K) allows a data transmission only from the transmitter (Tx) to the receiver (Rx).

## Revendications

1. Système de transmission de données avec un émetteur (Tx) qui émet de la lumière, un récepteur (Rx) qui reçoit de la lumière et un canal de transmission de données (DK), le canal de transmission de données (K) n'étant pas limité dans sa largeur de bande et la transmission du signal de données (Sig) à transmettre se faisant avec une largeur de bande maximale donnée de l'émetteur (Tx), **caractérisé en ce qu'**est prévu un dispositif de précorrection de distorsion (PD) en amont de l'émetteur (Tx) pour la précorrection de distorsion d'un signal de données (Sig) à transmettre de l'émetteur (Tx) vers le récepteur (Rx) via le canal de transmission de données, le signal à transmettre par l'émetteur (Tx) pouvant être traité de manière telle par le dispositif de précorrection de distorsion (PD) que la puissance optique délivrée par l'émetteur (Tx) correspond approximativement à un signal rectangulaire.

2. Système de transmission de données selon la revendication 1, **caractérisé en ce qu'**est utilisée, en tant que canal de transmission de données (K), une transmission de données orientée du signal de données (Sig) dans l'espace libre entre l'émetteur (Tx) et le récepteur (Rx).

3. Système de transmission de données selon la revendication 2, **caractérisé en ce que** le canal de transmission de données ne présente pas de réflexions diffuses.

4. Système de transmission de données selon l'une des revendications précédentes, **caractérisé en ce que** le canal de transmission de données (K) est réalisé sous la forme d'une liaison de point à point entre l'émetteur (Tx) et le récepteur (Rx).

5. Système de transmission de données selon l'une des revendications précédentes, **caractérisé en ce que** la limitation de largeur de bande du canal de transmission de données (K) est supérieure à la/aux largeur(s) de bande de l'émetteur (Tx) et/ou du récepteur (Rx).

6. Système de transmission de données selon l'une des revendications précédentes, **caractérisé en ce que** le canal de transmission de données (K) permet une transmission de données uniquement de l'émetteur (Tx) vers le récepteur (Rx).

7. Système de transmission de données selon l'une des revendications 1 à 6, **caractérisé en ce que** l'émetteur (Tx) est une diode luminescente (DEL), et plus particulièrement une DEL à lumière blanche ou une DEL infrarouge.

8. Système de transmission de données selon l'une des revendications 1 à 6, **caractérisé en ce que** l'émetteur (Tx) est un tube fluorescent.

9. Système de transmission de données selon l'une des revendications 1 à 6, **caractérisé en ce que** l'émetteur (Tx) est un laser.

10. Système de transmission de données selon l'une des revendications 1 à 6, **caractérisé en ce que** l'émetteur (Tx) est une lampe à incandescence.

11. Système de transmission de données selon l'une des revendications précédentes, **caractérisé en ce que** le récepteur (Rx) est une photodiode, et plus particulièrement une diode PIN.

12. Système de transmission de données selon l'une des revendications précédentes, **caractérisé en ce que** le signal de données (Sig) peut être envoyé sur un égaliseur (EQ) couplé au récepteur (Rx) afin d'exécuter une correction de distorsion en aval de la réception du signal de données (Sig).

13. Procédé de transmission de données dans un système de transmission de données avec un émetteur (Tx) qui émet de la lumière, un récepteur (Rx) qui reçoit de la lumière et un canal de transmission de données (K), **caractérisé par** les étapes suivantes :
- un signal de données (Sig) à transmettre de l'émetteur (Tx) vers le récepteur (Rx) via le canal de transmission de données (K) subit une précorrection de distorsion dans un dispositif de précorrection de distorsion (PD) en amont de l'émetteur (Tx), le signal à transmettre par l'émetteur (Tx) pouvant être traité de manière telle par le dispositif de précorrection de distorsion (PD) que la puissance optique délivrée par l'émetteur (Tx) correspond approximativement à un signal rectangulaire ;
- le signal de données (Sig) est transmis au récepteur (Rx) via le canal de transmission de données (K) qui n'est pas limité dans sa largeur de bande ; et
- la transmission du signal de données (Sig) se fait avec une largeur de bande maximale donnée de l'émetteur (Tx).

14. Procédé selon la revendication 13, **caractérisé en ce qu'**est utilisée, en tant que canal de transmission de données (K), une transmission de données orientée du signal de données (Sig) dans l'espace libre, en particulier sans réflexions diffuses, entre l'émetteur (Tx) et le récepteur (Rx).

15. Procédé selon la revendication 14, **caractérisé en ce qu'**est utilisée, en tant que canal de transmission de données (K), une liaison de point à point entre l'émetteur (Tx) et le récepteur (Rx).

16. Procédé selon l'une des revendications 13 à 15, **caractérisé en ce que** la limitation de largeur de bande du canal de transmission de données (K) est supérieure à la/aux largeur(s) de bande de l'émetteur (Tx) et/ou du récepteur (Rx).

17. Procédé selon l'une des revendications 13 à 16, **caractérisé en ce que** le canal de transmission de données (K) permet une transmission de données uniquement de l'émetteur (Tx) vers le récepteur (Rx).
